# EUROPEAN PATENT SPECIFICATION

(11) **EP 3 632 705 B1**
(45) Date of publication and mention of the grant of the patent: **17.02.2021**
(21) Application number: 19200674.0
(22) Date of filing: 01.10.2019
(51) Int. Cl.: B60C 15/00, B29D 30/00, B60C 19/00, B60C 15/06

(54) **TIRE AND TIRE MANUFACTURING METHOD**
REIFEN UND REIFENHERSTELLUNGSVERFAHREN
PNEUMATIQUE ET PROCÉDÉ DE FABRICATION DE PNEUMATIQUE

(30) Priority: 03.10.2018 JP 2018188130
(43) Date of publication of application: 08.04.2020
(73) Proprietor: Toyo Tire Corporation, Itami-shi, Hyogo 664-0847 (JP)
(72) Inventor: HOSOMI, Kazumasa, Itami-shi, Hyogo 664-0847 (JP)
(74) Representative: Müller-Boré & Partner Patentanwälte PartG mbB

(56) References cited:
- EP-A1- 0 505 905
- WO-A1-2017/046245
- FR-A1- 2 966 768
- US-A1- 2004 016 488

## Description

### BACKGROUND OF THE INVENTION

### Field of the Invention

The present invention relates to a tire into which an electronic component is embedded.

### Related Art

Conventionally, a tire embedding an electronic component such as an RFID tag has been known. With such a tire, it is possible to carry out production management of the tire, usage history management, etc. by the RFID tag embedded in the tire and a reader as external equipment carrying out communication. For example, Patent Document 1 discloses a tire in which a communication circuit configured from an RFID, etc. storing identification information, history information and an electrically conductive belt or carcass cord are connected by a bypass wire, allowing part of the electrically conductive belt or carcass cord to function as a loop antenna.

Patent Document 1: Japanese Unexamined Patent Application, Publication No. 2004-13399

Document US 2004/016488 describes an annular antenna loop that is electrically coupled to a transponder. The antenna and the transponder are at least partially embedded into a nonconductive carrier strip to form a ring assembly to render the antenna and transponder package unitarily transportable. The annular assembly affixes to a tire in a post-manufacture attachment procedure and at a location that minimizes exposure of the annular apparatus to strain and to electromagnetic interference from the metallic wheel rim.

Document EP 0 505 905 A1 describes a pneumatic tire having an integrated circuit transponder which, upon interrogation by an external RF signal, transmits tire identification and/or other data in digitally-coded form. The transponder has a coil antenna of small enclosed area as compared to the area enclosed by an annular tensile member comprising a bead of the tire. The annular tensile member, during transponder interrogation, acts as the primary winding of a transformer. The coil antenna is loosely coupled to the primary winding and is the secondary winding of the transformer. The coil antenna is substantially planar in shape, and, when positioned between the inner liner of the tire and its carcass ply, the transponder may include a pressure sensor responsive to tire inflation pressure.

Document FR 2 966 768 A1 describes a method involving: placing an assembly including an electronic device and a vulcanized rubber mass (55) that encapsulates the electronic device, in contact with raw rubber masses of a blank of a tire. The vulcanized rubber mass encapsulating the electronic device is electrically insulating, where the vulcanized rubber mass has an average thickness between 1 mm and 2 mm. An independent claim is also included for an assembly for a tire, comprising an electronic device.

Document WO 2017/046245 A1 describes a tyre fitted with a passive transponder comprising at least one radiating antenna which is embedded in an electrically insulating elastomer mixture so as to form a patch allowing communication with a radiofrequency reader arranged outside the tyre. This patch extends axially between the axially inner end of the casing ply and the inner surface of the tyre, and radially at a distance between that of the bead toe and that of the radially outer end of the bead.

### SUMMARY OF THE INVENTION

According to the technology illustrated in Patent Document 1, it is possible to perform management of history information, etc. of a tire, by performing communication causing part of the electrically conductive belt or carcass cord to function as a loop antenna. However, in the design of the antenna, it is necessary to optimize the length of the antenna according to the frequency band to be used. More specifically, when considering the resonance condition of the antenna and radio waves, it is preferable for the length of the antenna to be set to a length such as half of the wavelength of the frequency to be used, or 1/4. However, in Patent Document 1, with the belt or carcass cord shown as the member constituting the antenna, the dimensions thereof tend to be influenced by measurement error upon manufacture. Consequently, it is difficult to accurately set the length of the antenna using these. In other words, when considering the measurement error upon manufacture, etc., it is difficult to consider that causing a part of the electrically conductive belt or carcass cord to function as a loop antenna is a preferable situation in terms of communication quality. In addition, with the technology disclosed in Patent Document 1, although an electronic component and a belt or carcass cord serving as an electrically conductive member are made to electrically contact intentionally; however, in the case of not having such an intention, if the electronic component and the electrically conductive member electrically contact, there is a possibility of a performance change of the electronic component occurring, and maintaining the characteristics of the electronic component becoming difficult.

The present invention has been made taking account of the above-mentioned problem, and an object thereof is to provide a tire which can maintain the characteristic of the electronic component, even when arranging the electronic component close to an electrically conductive member such as the steel side ply which serves as a metal reinforcement layer This problem is solved by the tires according to claims 1 and 3 and by the tire manufacturing methods of claims 4 and 5.

The tire according to claim 1 may further include: a ring-shaped tread (for example, the tread 12) extending in a circumferential direction of the tire; and a pair of beads (for example, the bead 11) having a bead filler (for example, the bead filler 22) which extends to an outer side in a tire-radial direction of the bead core (for example, the bead core 21), in which the carcass ply may include: a ply body (for example, the ply body 24) which extends from the one bead core to the other bead core, and a ply folding part (for example, the ply folding part 25) which is folded back around the bead core, the metal reinforcement layer may be provided between the ply folding part and the bead filler, and the electronic component may be provided between the metal reinforcement layer and the ply folding part.

According to the present invention, it is possible to provide a tire which can maintain the characteristic of the electronic component, even when arranging the electronic component close to an electrically conductive member such as the steel side ply which serves as a metal reinforcement layer.

### BRIEF DESCRIPTION OF THE DRAWINGS

FIG. 1 is a view showing a half section in a tire-width direction of a tire according to a first embodiment of the present invention;
FIG. 2 is a partially enlarged view of a tire according to the first embodiment of the present invention;
FIG. 3 is a view for explaining the reason for providing an insulating layer between the steel side ply and the RFID tag in the first embodiment of the present invention;
FIG. 4 is a view for explaining the reason for providing an insulating layer between the steel side ply and the RFID tag in the first embodiment of the present invention;
FIG. 5 is a view for explaining the reason for providing an insulating layer between the steel side ply and RFID tag and the configuration thereof, in the first embodiment of the present invention;
FIG. 6 is a view showing a half section in a tire-width direction of a tire according to a modified example of the first embodiment of the present invention;
FIG. 7 is a partially enlarged cross-sectional view of a tire according to a modified example of the first embodiment of the present invention;
FIG. 8 is a view showing a half section in the tire-width direction of a tire according to a second embodiment of the present invention;
FIG. 9 is a partially enlarged cross-sectional view of the tire according to the second embodiment of the present invention;
FIG. 10A is a view showing an RFID tag protected by a protective member in a tire according to a fifth embodiment of the present invention;
FIG. 10B is a view showing the b-b cross section in FIG. 10A;
FIG. 10C is a view showing the c-c cross section in FIG. 10A; and
FIG. 11A is a view showing an RFID tag protected by a protective member in a tire according to a fourth embodiment of the present invention;
FIG. 11B is a view showing a cross-section b-b in FIG. 11A;
FIG. 11C is a view showing a cross-section c-c in FIG. 11A;
FIG. 12 is a view showing a cross section prior to interposing the RFID tag by rubber sheets, in a case of not filling rubber into the spring antenna;
FIG. 13 is a view showing a cross section after interposing the RFID tag by rubber sheets, in a case of not filling rubber into the spring antenna;
FIG. 14 is a view showing a cross section after interposing the RFID tag by rubber sheets, in a case of not filling rubber into the spring antenna;
FIG. 15 is a view showing the RFID tag prior to filling rubber into the spring antenna, in a tire according to a fifth embodiment of the present invention;
FIG. 16 is a view showing the RFID tag prior to filling rubber into the spring antenna, in a tire according to a fifth embodiment of the present invention;
FIG. 17 is a view showing the RFID tag prior to interposing by rubber sheets, in the tire according to the fifth embodiment of the present invention; and
FIG. 18 is a view showing the RFID tag interposed by rubber sheets, in the tire according to the fifth embodiment of the present invention.

### DETAILED DESCRIPTION OF THE INVENTION

### <First Embodiment>

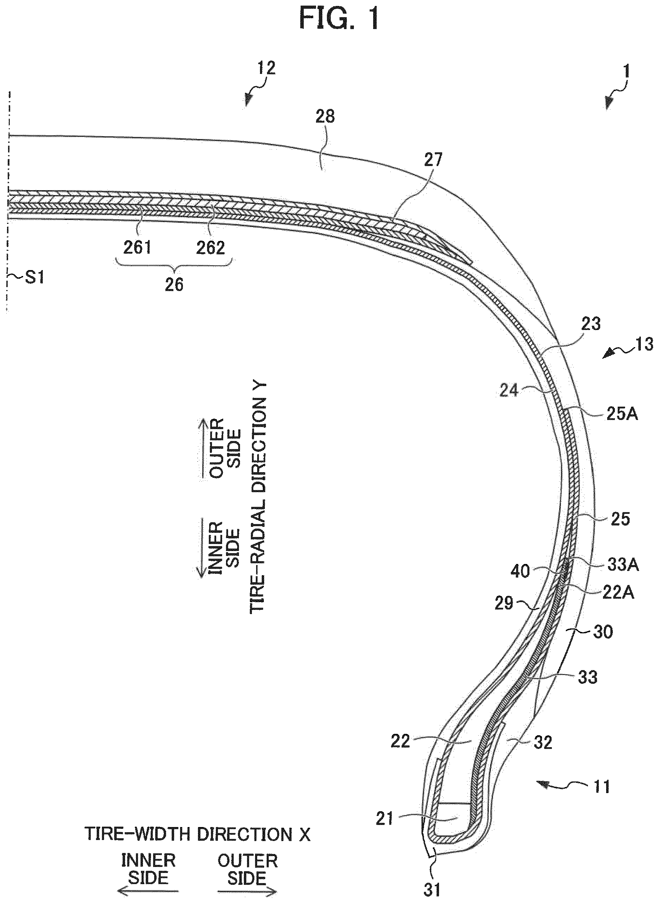

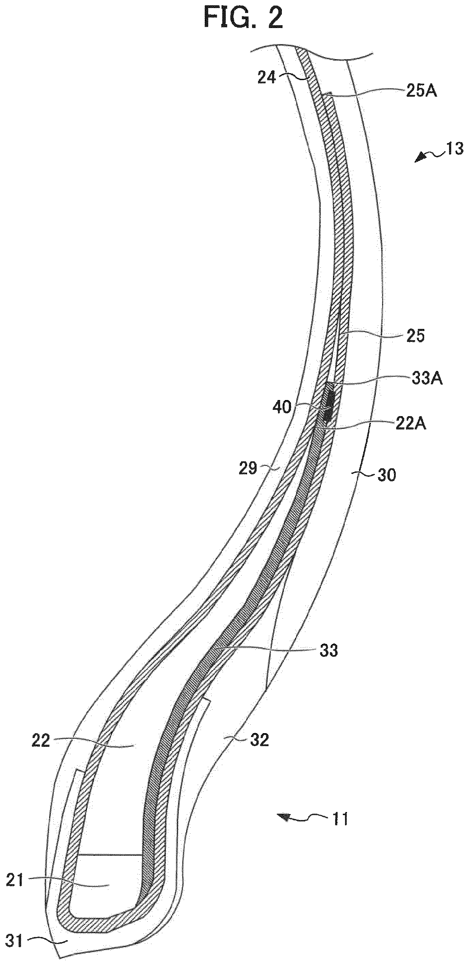

Hereinafter, a first embodiment of the present invention will be explained while referencing the drawings. FIG. 1 is a view showing a half section in a tire-width direction of a tire 1 according to the present embodiment. The basic structure of the tire is left/right symmetric in the cross section of the tire-width direction; therefore, a cross-sectional view of the right half is shown herein. In the drawings, the reference symbol S1 is the tire equatorial plane. The tire equatorial plane S1 is a plane orthogonal to the tire rotation axis, and is positioned in the center of the tire-width direction. Herein, tire-width direction is a direction parallel to the tire rotation axis, and is the left/right direction of the paper plane of the cross-sectional view in FIG. 1. In FIG. 1, it is illustrated as the tire-width direction X. Then, inner side of tire-width direction is a direction approaching the tire equatorial plane S1, and is the left side of the paper plane in FIG. 1. Outer side of tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer side of tire-radial direction is a direction distancing from the tire rotation axis, and is the upper side of the paper plane in FIG. 1. Inner side of tire-radial direction is a direction approaching the tire rotation axis, and is the lower side of the paper plane in FIG. 1. The same also applies to FIGS. 2, and 6 to 9.

The tire 1 is a tire for passenger cars, for example, and includes a pair of beads 11 provided at both sides in the tire-width direction, a tread 12 forming the contact patch with the road surface, and a pair of side walls 13 extending between the pair of beads 11 and the tread 12.

The bead 11 includes an annular bead core 21 formed by wrapping around several times bead wires made of metal coated with rubber, and a bead filler 22 of tapered tip shape extending to the outer side in the tire-radial direction of the bead core 21. The bead core 21 is a member which plays a role of fixing a tire filled with air to the rim of a wheel which is not illustrated. The bead filler 22 is a member provided in order to raise the rigidity of the bead peripheral part and to ensure high maneuverability and stability, and is configured from rubber of a higher modulus than the surrounding rubber members, for example.

A carcass ply 23 constituting a ply serving as the skeleton of the tire is embedded inside of the tire 1. The carcass ply 23 extends from one bead core to the other bead core. In other words, it is embedded in the tire 1 between the pair of bead cores 21, in a form passing through the pair of side walls 13 and the tread 12. As shown in FIG. 1, the carcass ply 23 includes a ply body 24 which extends from one bead core to the other bead core, and extends between the tread 12 and bead 11, and a ply folding part 25 which is folded around the bead core 21. In the present embodiment, the ply folding part 25 is overlapped with the ply body 24. The carcass ply 23 is configured by a plurality of ply cords extending in the tire-width direction. In addition, a plurality of ply cords is arranged side by side in a tire circumferential direction. This ply cord is configured by an insulated organic fiber cord such as polyester or polyamide, or the like, and is covered by rubber.

The steel side ply 33 serving as a metal reinforcement layer is arranged between the ply winding-back part 25 of the carcass ply 23 and the bead filler 22. This steel side ply 33 is configured by a plurality of steel cords covered by the rubber, and is provided for reinforcing the carcass ply 23. In the present embodiment, the end part 33A of the steel side ply 33 is positioned more to an outer side in the tire radial-direction than the tire-radial direction outside end 22A of the bead filler 22, which is more to the inner side in the tire-radial direction than the end part 25A of the ply winding-back part 25.

In the tread 12, at least one ring-shaped steel belt 26 which extends in a circumferential direction of the tire is provided in the outer side in the tire-radial direction of the carcass ply 23. The steel belt 26 is configured by a plurality of steel cords covered by rubber. By providing the steel belts 26, the rigidity of the tire is ensured, and the contact state of the road surface with the tread 12 improves. In the present embodiment, although two layers of steel belts 261, 262 are provided, the number of layered steel belts 26 is not limited thereto.

At the outer side in the tire-radial direction of the steel belt 26, a cap ply 27 serving as a belt reinforcement layer is provided. The cap ply 27 is configured from an insulating organic fiber layer such as of polyamide fibers, and is covered by rubber. By providing the cap ply 27, it is possible to achieve an improvement in durability and a reduction in road noise while travelling.

The tread rubber 28 is provided at the outer side in the tire-radial direction of the cap ply 27. A tread pattern (not illustrated) is provided to the outer surface of the tread rubber 28, and this outer surface serves as a contact patch which contacts with the road surface.

In the bead 11, side wall 13 and tread 12, an inner liner 29 serving as a rubber layer constituting an inside wall surface of the tire 1 is provided to a tire inner cavity side of the carcass ply 23. The inner liner 29 is configured by air permeation resistant rubber, whereby the air inside the tire inner cavity is prevented from leaking to outside.

In the side wall 13, the side wall rubber 30 constituting the outer wall surface of the tire 1 is provided to the outer side in the tire-width direction of the carcass ply 23. This side wall rubber 30 is a portion which bends the most upon the tire exhibiting a cushioning action, and usually flexible rubber having fatigue resistance is adopted therein.

A chafer 31 is provided on the inner side in the tire-radial direction of the carcass ply 23 provided around the bead core 21 of the bead 11. The chafer 31 also extends to the outer side in the tire-width direction of the ply folding part 25 of the carcass ply 23, and rim strip rubber 32 is provided at the outer side in the tire-width direction thereof and the inner side in the tire-radial direction. The outer side in the tire-width direction of this rim strip rubber 32 connects with the side wall rubber 30.

An RFID tag 40 is embedded as an electrical component in the tire 1 of the present embodiment. The RFID tag 40 is a passive transponder equipped with an RFID chip and an antenna for performing communication with external equipment, and performs wireless communication with a reader (not illustrated) serving as the external equipment. As the antenna, a coil-shaped spring antenna, plate-shaped antenna, and various types of rod-shaped antennas can be used. For example, it may be an antenna formed by printing a predetermined pattern on a flexible substrate. The antenna is set to the optimized antenna length, according to the frequency band, etc. to be used. In a storage part inside the RFID chip, identification information such as a manufacturing number and part number is stored.

FIG. 2 is an enlarged cross-sectional view showing around the embedded part of the RFID tag 40 in the tire 1 of FIG. 1. As shown in FIGS. 1 and 2, in the present embodiment, the RFID tag 40 is arranged in a state sandwiched between the steel side ply 33 and ply folding part 25. In addition, an insulating layer described later is arranged between the RFID tag 40 and the steel side ply 33.

In this way, since the RFID tag 40 is sandwiched between the steel side ply 33 and ply folding part 25, it is possible to prevent the antenna of the RFID tag 40 from directly pressing the side-wall rubber 30 or inner liner 29, which are the rubber structure of the tire 1, during vulcanization and during use.

Herein, the RFID tag 40 is mounted prior to the vulcanization process, in the manufacturing process of the tire. In the present embodiment, in the steel side ply 33 or the ply folding part 25 of the carcass ply 23 prior to the coating rubber being vulcanized, the RFID tag 40 is mounted so as to establish a form in which the insulating layer 34 described later is sandwiched between the steel side ply 33 and RFID tag 40. At this time, since the coating rubber of the steel side ply 33 and carcass ply 23 is in the state of raw rubber prior to vulcanization, it is possible to paste the insulating layer 34 and/or RFID tag 40 using the adhesiveness thereof. Alternatively, in the case of the adhesiveness being low or the like, it may be pasted using an adhesive, etc. Subsequently, the insulating layer 34 and RFID tag 40 are interposed by the steel side ply 33 and carcass ply 23. After interposing, the green tire in which the respective constituent members including the RFID tag 40 are assembled is vulcanized in the vulcanization process to manufacture a tire.

In this way, in the present embodiment, since it is possible to paste the insulating layer 34 and/or RFID tag 40 to the steel side ply 33 or carcass ply 23 covered by the raw rubber having rigidity and having adhesiveness during tire manufacture, the assembly work of the RFID tag 40 in the manufacturing process of the tire is easy. In particular, since the steel side ply 33 has very high rigidity, the mounting work of the RFID tag 40 is extremely simple.

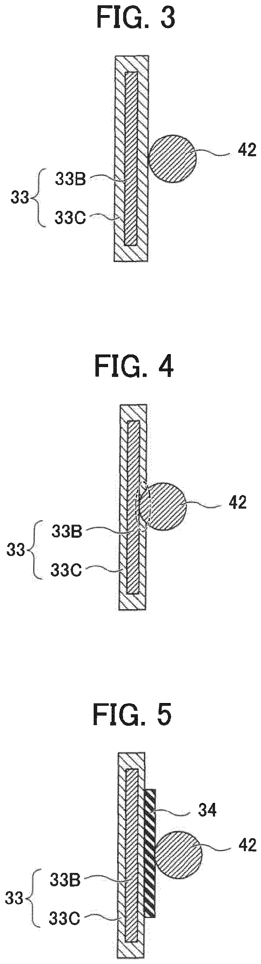

Herein, the configuration providing the insulating layer 34 between the steel side ply 33 and RFID tag 40 and the reason thereof will be explained using FIGS. 3 to 5. First, the behaviors before and after the vulcanization process at the periphery of the RFID tag 40, in the case of not providing the insulating layer 34, will be explained as a comparative example using FIGS. 3 and 4. FIG. 3 is a view schematically showing a state prior to the vulcanization process in the vicinity of the RFID tag 40, which is a view showing a cross section of the steel side ply 33 and a cross section of the antenna 42 of the RFID tag 40. Prior to the vulcanization process, the steel cord 33B of the steel side ply 33 is covered by the coating rubber 33C, which is raw rubber. The RFID tag 40 is pasted to the steel side ply 33 using the adhesiveness of the coating rubber 33C, which is raw rubber.

FIG. 4 is a view schematically showing a state after the vulcanization process in the vicinity of the RFID tag 40. Each member constituting the tire exhibits a variety of behaviors such as expansion and contraction in the vulcanization process. At this time, at a portion at which the RFID tag 40 sandwiched between the steel side ply 33 and carcass ply 23 is positioned, the coating rubber 33C may be crushed and damaged, due to the presence of the RFID tag 40. Then, at this time, there is concern over the antenna 42 of the RFID tag 40 and the steel cord 33B made of metal directly making contact. If the RFID tag 40 and the steel cord 33B made of metal directly make contact in this way, the substantial length of the antenna changes, and as a result thereof, the communication quality declines.

Therefore, in the present embodiment, as shown in FIG. 5, the insulating layer 34 is arranged between the steel side ply 33 and RFID tag 40 prior to vulcanization. It is thereby possible to effectively prevent contact between the antenna 42 of the RFID tag 40 and the steel cord 33B also after the vulcanization process.

As the insulating layer 34, it is possible to use various insulative materials which can prevent contact between the antenna 42 of the RFID tag 40 and the steel cord 33B also after the vulcanization process. For example, a film-like sheet or fiber layer may be used. In addition, it may be raw rubber prior to vulcanization having an insulating property. In the case of using a fiber layer as the insulating layer 34, it is possible to use an organic fiber layer from polyester fibers, polyamide fibers or the like. By using a fiber layer, it becomes possible to reliably distance between the steel side ply 33 and RFID tag 40 even after vulcanization by the amount of the thickness of the fiber layer. In addition, the fiber layer may be embedded in the rubber sheet, and this may be used as the insulating layer 34.

In addition, the insulating layer 34 may be configured by a material such as rubber kneading thereinto short-fiber filler. As the short fiber filler, for example, it is possible to use short fibers having insulating property such as organic short fibers like aramid short fibers and cellulose short fibers, and inorganic short fibers like ceramic short fibers such as alumina short fibers, or glass short fibers. It is possible to raise the strength of rubber by blending such short-fiber fillers into the rubber.

In addition, the rubber sheet in the state after vulcanization may be used as the insulating layer 34. The rubber sheet in the state after vulcanization can effectively prevent contact between the antenna 42 of the RFID tag 40 and the steel cord 33B, due to not elastically deforming as would raw rubber prior to vulcanization. In other words, in the state in which the respective constituent members constituting the tire are still before vulcanization, the rubber sheet in a state after vulcanization is arranged between the coating rubber 33C of the steel side play 33 and the RFID tag 40. Subsequently, the green tire in which the respective constituent members are assembled may be vulcanized in the vulcanization process.

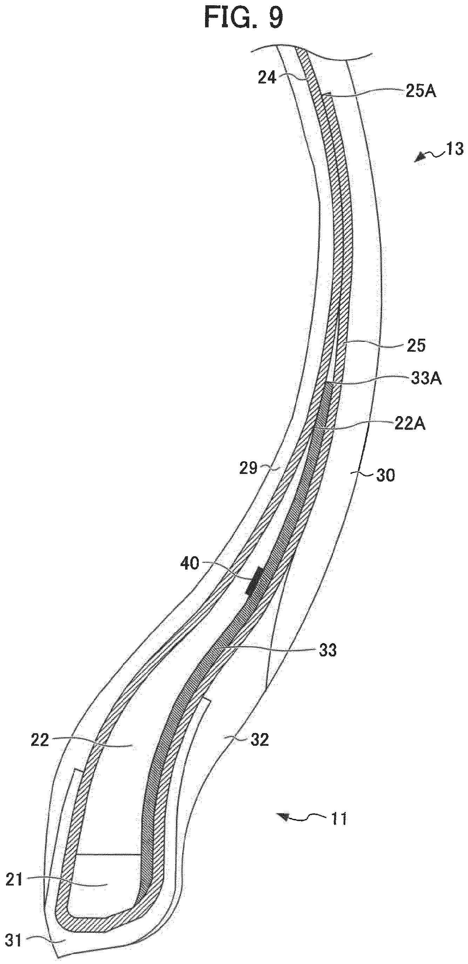

It should be noted that the RFID tag 40 embedded in the tire, when including an antenna, often has a longitudinal direction, as shown as the RFID tag 40 in FIG. 9 described later. It is preferable for such an RFID tag 40 to be embedded in the tire 1, so that the longitudinal direction thereof is a direction of the tangential line to the circumferential direction of the tire, i.e. direction orthogonal to the paper plane in the cross-sectional views of FIGS. 1 and 2. By embedding in this way, stress is hardly applied to the RFID tag 40, when the tire deforms.

It should be noted that, in the present embodiment, although the RFID tag 40 is embedded in the tire as an electronic component, the electronic component embedded in the tire is not limited to an RFID tag. For example, it may be various electronic components such as a sensor which carries out wireless communication. In addition, if the electronic component makes electrical contact with a conductive member, there is a possibility of a performance change arising in the electronic component, and thus becoming difficult to maintain the characteristic of the electronic component. Consequently, even in the case of embedding various electronic components in a tire, it is possible to obtain the effects of the present invention. For example, the electronic component may be a piezoelectric element or strain sensor.

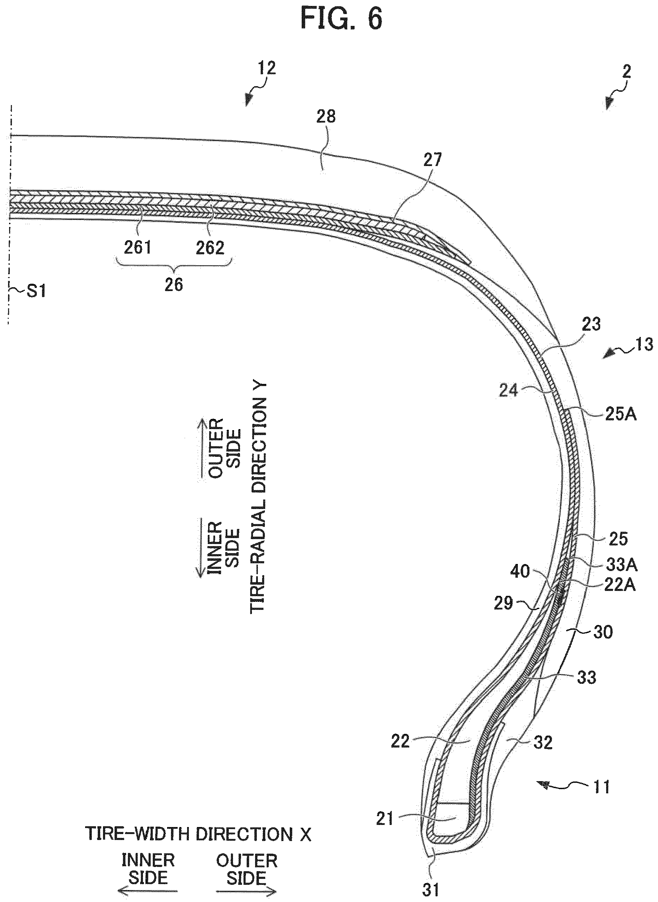

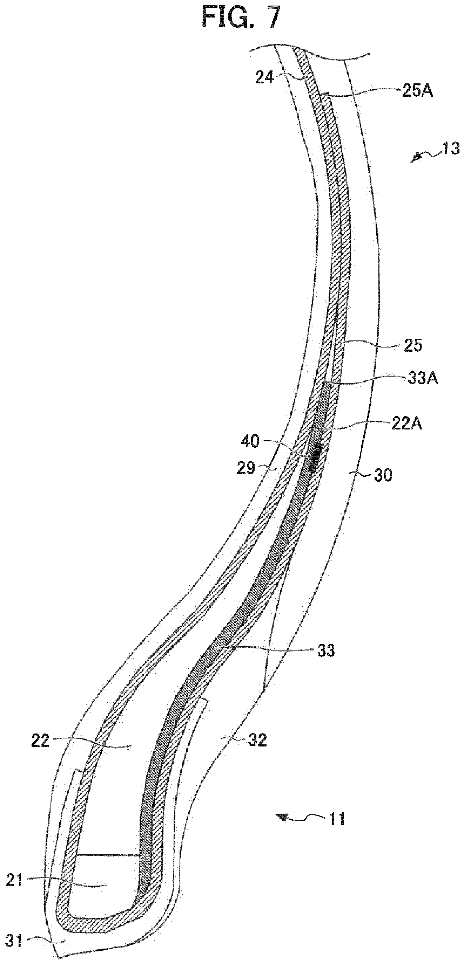

FIG. 6 is a view showing a half section in the tire-width direction of the tire 2 of a modified example of the present embodiment. FIG. 7 is an enlarged cross-sectional view showing around the embedded part of the RFID tag 40 in the tire 2 of FIG. 6. The RFID tag 40 may be arranged in the vicinity of the tire-radial direction outside end 22A of the bead filler 22, as shown in the present modified example. It should be noted that, also in the present modified example, the RFID tag 40 is arranged in a state sandwiched between the steel side ply 33 and the ply folding part 25. In addition, the aforementioned insulating layer 34 is arranged between the steel side ply 33 and RFID tag 40.

Even if this case, by the insulating layer 34 shown in FIG. 5 being provided, the communication quality will not decline by the antenna 42 of the RFID tag 40 and the steel cord 33B made of metal making contact. Furthermore, since the RFID tag 40 is provided in the vicinity of the tire-radial direction outside end 22A of the bead filler 22, which is rubber of high modulus, there is little deformation around the RFID tag 40, and stress will hardly concentrate. Consequently, the RFID tag 40 is hardly damaged.

According to the tires 1, 2 of the present embodiment, the following effects are exerted.
(1) The tires 1, 2 according to the present embodiment are tires including the carcass ply 23 extending from one bead core to the other bead core, and the steel side ply 33 which reinforces the carcass ply, and includes the RFID tag 40 arranged in the vicinity of the steel side ply 33, and the insulating layer 34 arranged between the steel side ply 33 and RFID tag 40. In addition, the manufacturing method of the tire 1 according to the present embodiment includes an arrangement process of arranging the insulating layer 34 between the steel side ply 33 and RFID tag 40, prior to the vulcanization process of vulcanizing the green tire. Also during the vulcanization process, it is thereby possible to effectively prevent contact between the antenna 42 of the RFID tag 40 and the steel cord 33B.
(2) In the tires 1, 2 according to the present embodiment, the RFID tag 40 is provided between the steel side ply 33 and the ply folding part 25. It is thereby possible to prevent the antenna of the RFID tag 40 from directly pressing the side wall rubber 30 and/or inner liner 29, which are rubber structures of the tire 1, during vulcanization and during use.
(3) In the tires 1, 2 according to the present embodiment, the insulating layer 34 is configured to include a fiber layer. It thereby becomes possible to reliably separate between the steel side ply 33 and RFID tag 40 by the thickness amount of the fiber layer, and it is possible to effectively prevent contact between the antenna 42 of the RFID tag 40 and the steel cord 33B.
(4) In the tires 1, 2 according to the present embodiment, the insulating layer 34 is configured by a layer kneading thereinto short fibers. It is thereby possible to raise the strength of the insulating layer, and effectively prevent contact between the antenna 42 of the RFID tag 40 and the steel cord 33B.
(5) In the tires 1, 2 according to the present embodiment, the short fibers are organic short fibers or inorganic short fibers. It is thereby possible to raise the strength of the insulating layer, and effectively prevent contact between the antenna 42 of the RFID tag 40 and the steel cord 33B.
(6) In the tires 1, 2 according to the present embodiment, the insulating layer 34 is a film-like sheet. It is thereby possible to effectively prevent contact between the antenna 42 of the RFID tag 40 and the steel cord 33B.

### <Second Embodiment>

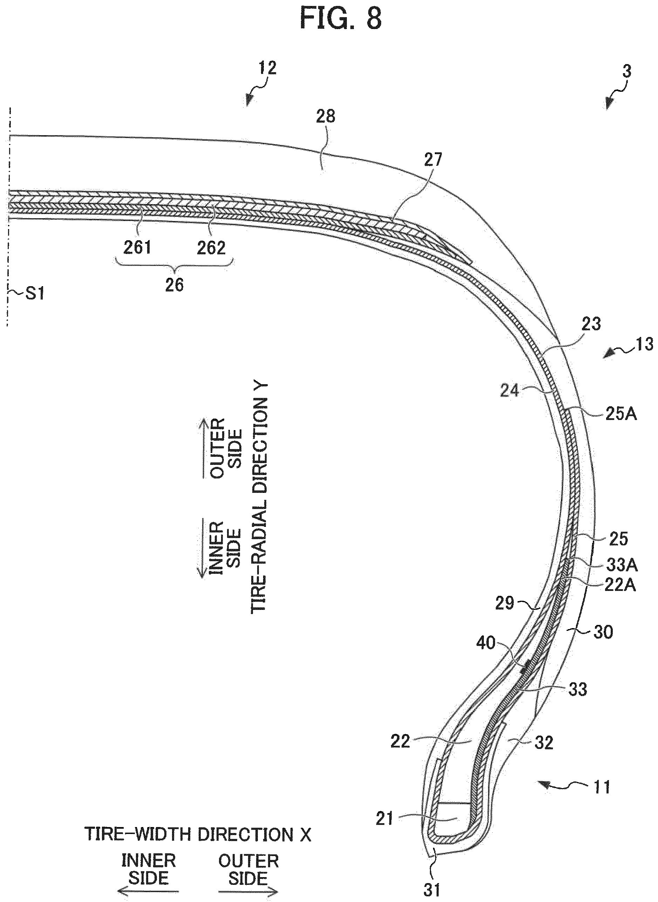

Next, a tire 3 according to a second embodiment will be explained while referencing FIGS. 8 and 9. It should be noted that the same reference symbol will be attached for the same configurations as the first embodiment in the following explanation, and detailed explanations thereof will be omitted.

FIG. 8 is a view showing a half section in the tire-width direction of the tire 3 in the present embodiment. FIG. 9 is an enlarged cross-sectional view showing around an embedded part of the RFID tag 40 in the tire 3 of FIG. 8. In the present embodiment, the RFID tag 40 serving as the electronic component is arranged between the steel side ply 33 and bead filler 22. Then, similarly to the first embodiment, the insulating layer 34 shown in FIG. 5 is arranged between the steel side ply 33 and RFID tag 40. In other words, the insulating layer 34 is arranged at an outer side in the tire-width direction of the RFID tag 40, and an inner side in the tire-width direction of the steel side ply 33.

Even in this case, by the insulating layer 34 being provided, the communication quality will not decline by the antenna 42 of the RFID tag 40 and steel cord 33B contacting. Furthermore, since the RFID tag 40 is provided between the steel side ply 33 and the bead filler 22, which is rubber of high modulus, there is little deformation around the RFID tag 40, and stress hardly concentrates.
Consequently, the RFID tag 40 is hardly damaged.

In addition, according to the present embodiment, the RFID tag 40 is hardly affected by distortion of the tire, etc. while travelling, due to the movement being restricted by the fiber layer constituting the carcass ply 23. Consequently, it is possible to improve the durability of the RFID tag 40 by way of existing components, without using additional components. In addition, according to the present embodiment, the shock protection also improves. In other words, even if a shock acts on the side wall 13, since the distance from the outer wall face of the tire 3 to the RFID tag 40 is far, and since the carcass ply 23 and steel side ply 33 are present between the outer wall face of the tire 3 to the RFID tag 40, the RFID tag 40 will be protected. It should be noted that the position at which arranging the RFID tag 40 is not limited to the positions shown in FIGS. 8 and 9. For example, it may be in the vicinity of the tire-radial direction outside end 22A of the bead filler 22.

According to the tire 3 of the present embodiment, the following effects are exerted in addition to the above (1) to (6) .

(7) In the present embodiment, the RFID tag 40 is arranged between the steel side ply 33 and bead filler 22. Consequently, it is hardly affected by distortion of the tire, etc. while travelling, and thus it is possible to improve the durability of the RFID tag 40. In addition, since the distance from the outer wall surface of the tire 3 until the RFID tag 40 becomes far, it is possible to improve impact protection.

### <Third Embodiment>

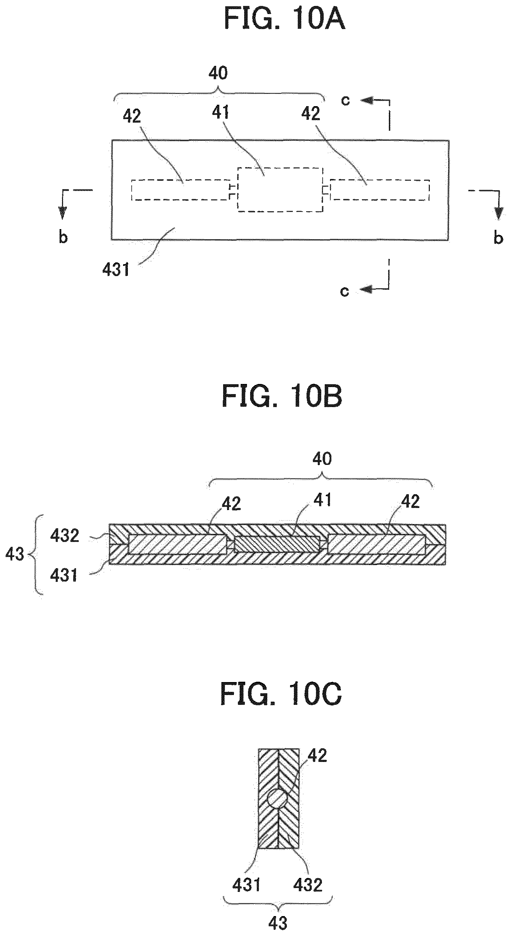

Next, a tire according to a third embodiment will be explained while referencing FIGS. 10A to 10C. It should be noted that the same reference symbol will be attached for the same configurations as the first and second embodiments in the following explanation, and detailed explanations thereof will be omitted.

FIG. 10A is a view showing the RFID tag 40 covered by the protective member 43 which is constituted from a rubber sheet. In FIG. 10A, the RFID tag 40 is covered by a rubber sheet 431 described later to be hidden. FIG. 10B is a cross-sectional view along the line b-b in FIG. 10A, and FIG. 10C is a cross-sectional view along the line c-c in FIG. 10A. In the present embodiment, the RFID tag 40 is covered by the protective member 43, as shown in FIGA. 10A to 10C. In the present embodiment, the insulating layer 34 is arranged between the RFID tag 40 protected by the protective member 43 and the steel side ply 33. A configuration using the RFID tag 40 protected by the protective member 43 is also applicable to the tires of either embodiment among the first and second embodiments.

The RFID tag 40 includes an RFID chip 41 and antenna 42 for performing communication with external equipment. As the antenna 42, a coil-shaped spring antenna, plate-shaped antenna, and various types of rod-shaped antennas can be used. For example, it may be an antenna formed by printing a predetermined pattern on a flexible substrate. When considering the communicability and flexibility, a coil-shaped spring antenna is the most preferable. The antenna is set to the optimized antenna length, according to the frequency band, etc. to be used.

The protective member 43 is configured from two rubber sheets 431, 432 which protect by sandwiching the RFID tag 40.

The protective member 43 is configured by rubber of a predetermined modulus, for example. Herein, the modulus indicates 100% elongation modulus (M100) under a 23°C atmosphere, measured in accordance with "3.7 stress at a given elongation, S" of JIS K6251:2010.

As the rubber adopted in the protective member 43, rubber at least having a higher modulus than the side wall rubber 30 is used. For example, with the modulus of the side wall rubber 30 as a reference, it is preferable to use rubber of a modulus 1.1 to 2 times as the rubber used in the protective member 43.

It should be noted that, in the embodiment shown in FIGS. 8 and 9, when viewing in the tire-width direction, the RFID tag 40 is arranged in a region between the side-wall rubber 30 or rim strip rubber 32 serving as rubber members constituting the outer surface, and the bead filler 22. Therefore, by setting the modulus of the protective member 43 to be higher than the modulus of the rubber member constituting the outer surface, and lower than the modulus of the bead filler 22, in the case of the tire deforming, it is possible to prevent excessive stress from generating within the rubber structure at the embedded part of the RFID tag 40. In other words, it is possible to suppress the generation of stress.

In addition, the protective member 43 may be configured from a short-fiber filler mixed rubber. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber. In addition, as the protective member 43, a rubber sheet in the vulcanized state may be used. The rubber sheet in a vulcanized state does not plastically deform as would raw rubber, and thus can appropriately protect the RFID tag 40.

In addition, as the protective member 43, an organic fiber layer from polyester fibers or polyamide fibers may be provided. It is also possible to embed an organic fiber layer in the two rubber sheets 431, 432.

In this way, if configuring the protective member 43 by two rubber sheets, since it is possible to thinly form the RFID tag 40 including the protective member 43, it is favorable upon embedding in the tires 1 to 3. In addition, when assembling the RFID tag 40 in the constitutional members of the tires 1 to 3 prior to vulcanization, the RFID tag 40 covered by the rubber sheets can be installed very easily. For example, at a desired position of a member such as the steel side ply 33, carcass ply 23, and bead filler 22 prior to vulcanization, it is possible to appropriately paste the RFID tag 40 covered by the rubber sheets or the insulating layer 34 using the adhesiveness of the raw rubber. In addition, by also establishing the rubber sheets and insulating layer 34 as raw rubber prior to vulcanization, it is possible to more easily paste by employing the adhesiveness of the rubber sheet and insulating layer 34 themselves as well.

However, the protective member 43 is not limited to the form configured by two rubber sheets, and can adopt various forms. For example, at least one rubber sheet constituting the protective member, so long as covering at least part of the RFID tag 40, can obtain effects such as an improvement in workability in the manufacturing process and stress mitigation. In addition, for example, it may be a configuration wrapping one rubber sheet around the entire circumference of the RFID tag 40, or a configuration attaching the protective member in the form of a potting agent of high viscosity along the entire circumference of the RFID tag 40. Even if such a configuration, it will be possible to appropriately protect the RFID tag 40.

For example, in the first embodiment, in a case of adopting the configuration protecting the RFID tag 40 by the protective member 43, the RFID tag 40 comes to be sandwiched between the steel side ply 33 and ply folding part 25 together with the insulating layer 34, in a state covered by the protective member 43. In this case, by the existence of the protective member 43, the RFID tag 40 is protected even under the situation of the RFID tag 40 receiving stress from the ply body 24 and ply folding part 25 moving relatively. Consequently, the durability of the RFID tag 40 further improves. In addition, by protecting the RFID tag 40 by way of the protective member 43 and insulating layer 34, it is possible to raise the durability of the RFID tag 40, even in a case of embedding the RFID tag 40 in a portion which relatively greatly bends during tire deformation.

In addition, as previously mentioned, in the second embodiment, it is also possible to adopt a configuration embedding the RFID tag 40 protected by the protective member 43 in the tire. Also in this case, the durability of the RFID tag 40 improves.

It should be noted that the RFID tag 40 covered by the protective member 43 is embedded in the tire so that the longitudinal direction thereof becomes the direction of the tangential line relative to the circumferential direction of the tire, i.e. direction orthogonal to the paper plane in the cross-sectional view of FIGS. 1, 2, and 6 to 9. In addition, the rubber sheets 431, 432 are embedded in the tire in a form such that aligns in the tire-width direction. In other words, in the manufacturing process, one surface of either one of the rubber sheets 431, 432 is pasted to the steel side ply 33, for example, as a constituent member of the tire prior to vulcanization, via the insulating layer 34. By establishing such a form, stress will hardly act on the RFID tag 40, even when the tire deforms. In addition, in the manufacturing process, the work of attaching the RFID tag 40 covered by the protective member 43 becomes easy.

According to the tire of the present embodiment, the following effects are exerted in addition to the above (1) to (7) .
(8) In the present embodiment, the rubber sheets 431, 432 which cover at least part of the RFID tag 40 are provided in the vicinity of the RFID tag 40. It is thereby possible to appropriately protect the RFID tag 40, even in a case of arranging the RFID tag 40 at a portion which relatively greatly bends during tire deformation, for example.
(9) In the present embodiment, the protective member 43 is configured from rubber of higher modulus than the side wall rubber 30, or short-fiber filler mixed rubber, and the RFID tag 40 covered by this protective member 43 is embedded in the tire. Consequently, the RFID tag can be appropriately protected.
(10) In the present embodiment, the protective member 43 is configured from rubber of a modulus higher than the side wall rubber 30 or rim strip rubber 32, and the RFID tag 40 covered by this protective member 43 is embedded in the tire. Consequently, it is possible to prevent excessive stress from generating within the rubber structure at the embedded part of the RFID tag 40, in the case of the tire deforming.

### <Fourth Embodiment>

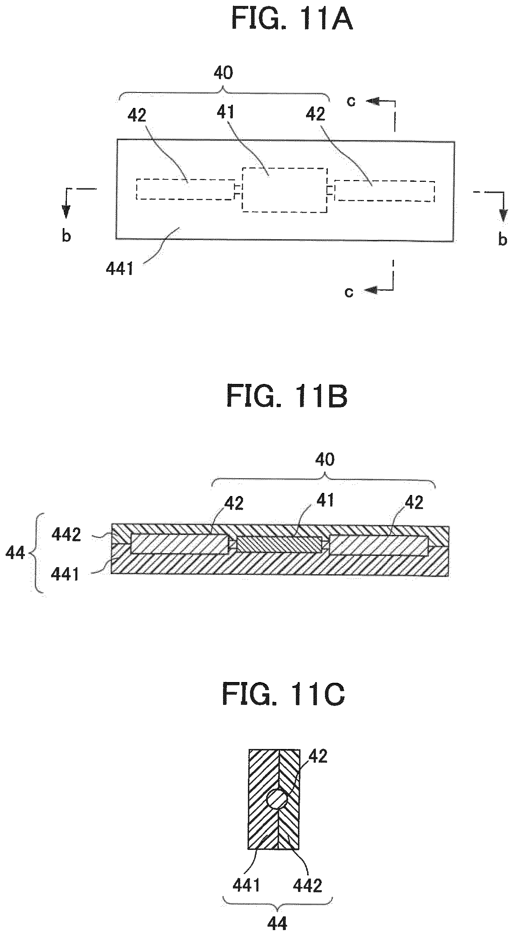

Next, a tire according to a fourth embodiment will be explained while referencing FIGS. 11A to 11C. It should be noted that the same reference symbol will be attached for the same configurations as the third embodiment in the following explanation, and detailed explanations thereof will be omitted. FIG. 11A is a view showing the RFID tag 40 protected by a protective member 44. In FIG. 11A, the RFID tag 40 is covered by a rubber sheet 441 described later and is hidden. FIG. 11B is a cross-sectional view along the line b-b in FIG. 11A, and FIG. 11C is a cross-sectional view along the line c-c in FIG. 11A.

In the present embodiment, the RFID tag 40 is covered by a protective member configured from two rubber sheets, similarly to the third embodiment. However, in the present embodiment, the thicknesses of the two rubber sheets constituting the protective member 44 differ. More specifically, the rubber sheet 441 on the side of the steel side ply 33 is formed thicker than the rubber sheet 442 on the opposite side thereof.

Since the side of the steel side ply 33 is strongly protected by the rubber sheet 441 and insulating layer 34, it is thereby possible to prevent the antenna 42 of the RFID tag 40 from contacting with the steel cord of the steel side ply 33 during vulcanization or during use.

It should be noted that, in order to more strongly protect the side of the steel side ply 33 in the present embodiment, the thickness of the rubber sheet 441 on the side of the steel side ply 33 is formed to be thicker; however, it is also possible to adopt other configurations for more strongly protecting the side of the steel side ply 33.

For example, the modulus of the rubber sheet 441 on the side of the steel ply 33 may be set to a higher modulus than the modulus of the rubber sheet 442 on the opposite side thereto. In this case, upon applying to the embodiment shown in FIGS. 1 and 2, if considering the absorption of stress during deformation of the tire, it is preferable for the relationship of the magnitudes of the modulus of each member to be "rubber sheet 441" (side contacting with steel side ply) > "rubber sheet 442" > "side-wall rubber 30".

It should be noted that, in the case of applying to the embodiment shown in FIGS. 8 and 9, when viewing in the tire-width direction, the RFID tag 40 is arranged in a region between the side-wall rubber 30 or rim strip rubber 32 serving as rubber members constituting the outer surface, and the bead filler 22. Therefore, if considering the absorption of stress during deformation of the tire, it is preferable for the relationship of magnitudes of modulus of each member to be "bead filler 22" > "rubber sheet 442" > "rubber sheet 441" (side contacting steel side ply 33) > "rubber member constituting outer surface" ("side-wall rubber 30" or "rim strip rubber 32").

In addition, the rubber sheet 441 may be constituted by short-fiber filler mixed rubber. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber.

In addition, as the rubber sheet 441, a rubber sheet in the vulcanized state may be used. The rubber sheet in a vulcanized state does not plastically deform as woulds raw rubber, and thus can effectively prevent contact between the antenna 42 of the RFID tag 40 and the steel cord 33B. In addition, an organic fiber layer such as of polyester fiber or polyamide fiber may be provided to the rubber sheet 441. In these cases, it is also possible to establish the thicknesses of the rubber sheets 441 and 442 as the same thickness.

Also according to these configurations, since the side of the steel side ply 33 is more strongly protected, it is possible to prevent the antenna 42 of the RFID tag 40 from contacting with the steel cord of the steel side ply 33 during vulcanization or during use.

According to the tire of the present embodiment, the following effects are exerted in addition to the above (1) to (10) .

(11) In the present embodiment, for the rubber sheets constituting the protective member 44, the rubber sheet 441 on the side of the steel side ply 33 is formed to be thicker than the rubber sheet 442 on the opposite side thereto. Since the side of the steel side ply 33 is more strongly protected, it is thereby possible to prevent the antenna 42 of the RFID tag 40 from contacting with the steel cord of the steel side ply 33.

### <Fifth Embodiment>

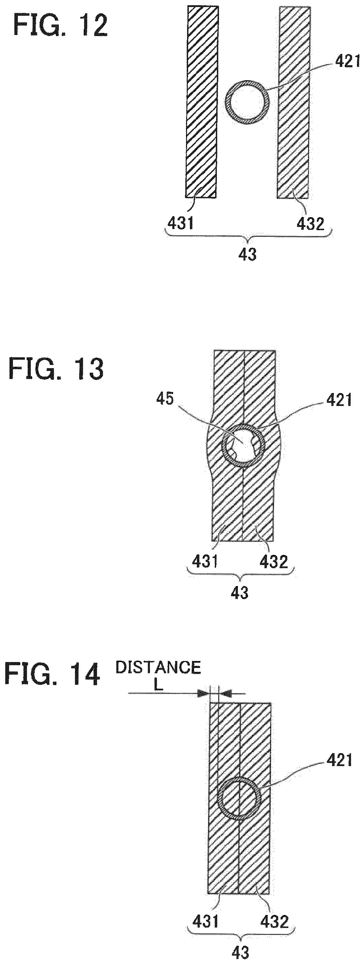

Next, a tire according to a fifth embodiment will be explained while referencing FIGS. 12 to 18. It should be noted that the same reference symbol will be attached for the same configurations as the third embodiment in the following explanation, and detailed explanations thereof will be omitted. The present embodiment is a particularly favorable embodiment in the case of the antenna of the RFID tag 40 being a coil-shaped spring antenna.

In the RFID tag 40 of the present embodiment, a coil-shaped spring antenna 421 having high communicability and flexibility can be used as the antenna. The spring antenna 421 is set to an optimized antenna length, according to the frequency band, etc. to be used.

In the present embodiment, the rubber is arranged within the spring antenna 421, prior to interposing the RFID tag 40 between the two rubber sheets 431, 432 constituting the protective member 43. More preferably, rubber is filled into the spring antenna so that air will not remain as much as possible. This process and the reason for adopting this process will be explained using FIGS. 12 to 18.

First, a state of the surroundings of the RFID tag 40 in a case of not filling rubber into the spring antenna 421 will be explained as a reference example using FIGS. 12 to 14. FIG. 12 is a view showing a cross section of the spring antenna 421, and rubber sheets 431, 432, prior to interposing the RFID tag 40 by the rubber sheets 431, 432. FIG. 13 is a view showing a cross section of the spring antenna 421, and rubber sheets 431, 432, after interposing the RFID tag 40 by the rubber sheets 431, 432.

As shown in FIG. 13, in this reference example, since rubber is not filled into the spring antenna 421 in advance, a certain amount of air 45 may remain within the spring antenna 421 after interposing by the rubber sheets 431, 432. If air remains in this way, the integrity of the rubber sheets 431, 432 and the spring antenna 421 becomes insufficient, and when the tire deforms, there is concern over the spring antenna 421 not following the motion of the rubber, and the RFID tag 40 having the spring antenna 421 being damaged.

It should be noted that raw rubber before vulcanization is used as the rubber sheets 431, 432 herein. Consequently, by pushing the rubber sheets 431, 432 from both sides, the rubber sheets 431, 432 sticks to some extent inside the spring antenna as shown in FIG. 13. However, very large amounts of time and labor are required in order to stick the rubber sheets 431, 432 until the inside of the spring antenna is completely embedded.

Then, even if assuming a case of taking time and sticking the rubber sheets until the inside of the spring antenna is embedded, the distance L between the outer circumferential part of the spring antenna 421 and the outer surface of the rubber sheets 431, 432 becomes very short, as shown in FIG. 14. In addition, it is difficult to stabilize this distance L, and locally thin portions can occur. Consequently, the protection of the RFID tag 40 by the rubber sheets 431, 42 becomes insufficient, and during vulcanization, there is a possibility of the rubber sheets 431, 432 being damaged. For example, there is a possibility of the rubber sheets 431, 431 being damaged during vulcanization, and the spring antenna 431 and the steel cord 33B of the steel side ply 33 contacting. In this case, since the length of the antenna substantially changes, the communication quality will decline.

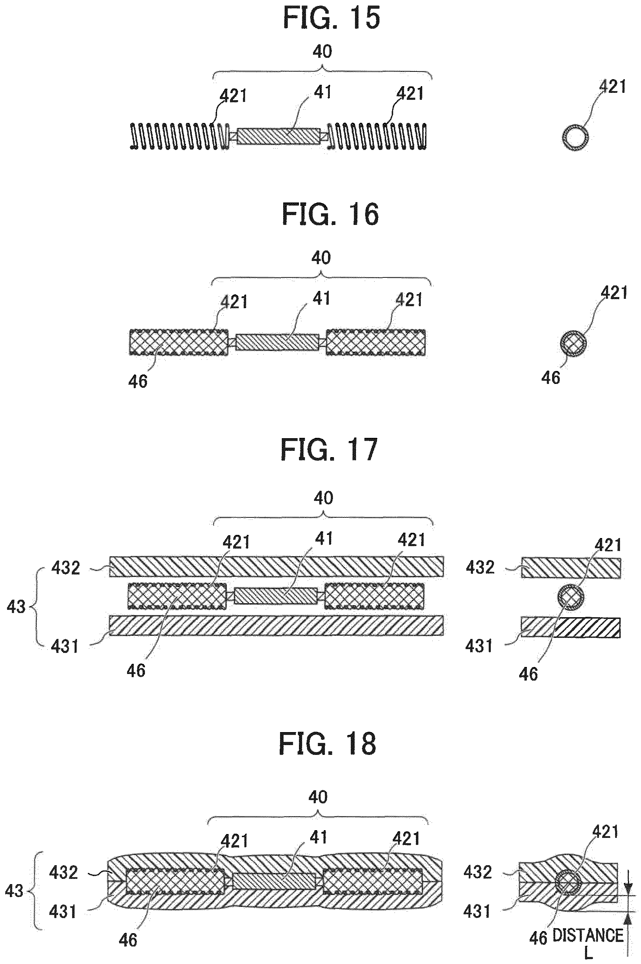

Therefore, in the present embodiment, prior to interposing the RFID tag 40 by the rubber sheets 431, 432, the rubber is arranged within the spring antenna 421, as shown in FIGS. 15 to 18. More preferably, rubber is filled within the spring antenna so that air does not remain as much as possible. It should be noted that the views shown on the right sides of FIGS. 15 to 18 are views showing a cross section of the spring antenna 421 and the surrounding thereof.

FIG. 15 is a view showing a state prior to filling the rubber 46 into the spring antenna 421, and FIG. 11 is a view showing a state after filling the rubber 46 into the spring antenna 421. The rubber 46 is embedded so as to be almost the same outside diameter as the outer circumferential face of the spring antenna 421. Then, in the case of the rubber 46 escaping from the outer circumferential face of the spring antenna 421, it is preferable to wipe off this portion. In other words, the outer circumferential face of the rubber 46 is preferably molded so as to become substantially the same surface as the outer circumferential face of the spring antenna 421. It should be noted that the rubber 46 may be filled into the spring antenna 421, and the outer circumference of the spring antenna 421 may be thinly wrapped by the rubber 46. On the other hand, if thickly wrapping the spring antenna 421 by the rubber 46, in addition to the flexibility of the spring antenna 421 being harmed, the dimension in the width direction formed by the rubber sheets 431, 432 after interposing the RFID tag 40 becomes larger, which is not preferable. It should be noted that the rubber 46 may be embedded so as to become substantially the same outside diameter as the inner circumferential face of the spring antenna 421. It is desirable for the outer circumferential part of the rubber 46 to be located within the range of the inner circumferential face and outer circumferential face of the spring antenna 421.

Herein, rubber having flexibility is used as the rubber 46 in order to ensure the flexibility of the spring antenna 421. However, it is preferable to use rubber of a modulus higher than the rubber sheets 431, 432 as the rubber 46, in consideration of the workability, etc. It should be noted that preferably unvulcanized rubber is used as the rubber 46 arranged within the spring antenna 421. By establishing the rubber 46 and rubber sheets 431, 432 as unvulcanized rubber and vulcanizing simultaneously, the integrity of the rubber 46, rubber sheets 431, 432 and spring antenna 421 rises. In addition, the rubber 46, and rubber sheets 431, 432 are more preferably established as the same type of rubber. It should be noted that, by emphasizing the flexibility of the spring antenna 421, rubber of lower modulus than the rubber sheets 431, 432 may be used as the rubber 46. In addition, rubber of substantially the same modulus, and rubber of the same material may be used. It should be noted that vulcanized rubber may be used as the rubber 46 arranged within the spring antenna 421. In addition, rubber-based adhesive, rubber-based filler, etc. can also be used. Taking account of configuring so as not to leave air within the spring antenna 421 as much as possible, while ensuring flexibility, it is possible to adopt various rubber-based materials. As the arranging operation of the rubber 46, various methods can be adopted; however, for example, it is also possible to inject rubber into the spring antenna 421 using a syringe. In this case, a set appropriate amount of the rubber 46 may be filled using a syringe. In addition, after filling a large amount of the rubber 46, portions protruding from the outer circumference of the spring antenna 421 may be wiped off.

FIG. 17 is a view showing a state prior to interposing the RFID tag 40 into which the rubber 46 is filled in the spring antenna 421, by the rubber sheets 431, 432, and FIG. 18 is a view showing a state after interposing by the rubber sheets 431, 432.

As shown in FIG. 18, according to the present embodiment, since the rubber 46 is filled in advance into the spring antenna 421, no air pockets exist between the rubber sheets 431, 432. Consequently, since it is unnecessary to be concerned over air pockets, the process of interposing the RFID tag 40 by the rubber sheets 431, 432 also becomes easy. In addition, by the rubber 46 being arranged within the spring antenna 421, the integrity of the spring antenna 421, rubber 46, and rubber sheets 431, 432 rises, and when the tire deforms, the spring antenna 421 follows the movement of the rubber. Consequently, the durability of the RFID tag 40 having the spring antenna 421 also improves.

In addition, according to the present embodiment, the distance L between the outer circumferential part of the spring antenna 421 and the outer circumferential face of the rubber sheets 431, 432 stabilizes. In other words, a distance close to the thickness of the rubber sheets 431, 432 is generally secured as this distance L. Consequently, the RFID tag 40 is sufficiently protected by the rubber sheets 431, 432. For example, one side of either of the rubber sheets 431, 432 comes to be arranged so as to contact with the steel side ply 33; however, the rubber sheet contacting with the steel side ply 33 will not be damaged during vulcanization, and the spring antenna 421 and the steel cord 33B of the steel side ply 33 will not contact. In the present embodiment, the RFID tag 40 interposed by the rubber sheets 431, 432 is fixedly set up inside the green tire, and subsequently, the green tire is vulcanized.

It should be noted that the present embodiment is particularly effective in the case of the RFID tag 40 being arranged more to the inner side in the tire-width direction than the carcass ply 23 or steel side ply 33, as shown in the first embodiment and second embodiment. During temperature rise in the vulcanization process of the green tire, the expansion amount of rubber members such as the inner liner 29 surpasses the expansion amount of the carcass ply 23 or steel side ply 33. Consequently, in a case of the distance L becoming shorter, as shown in FIG. 14, the RFID tag 40 is pressed to the carcass ply 23 or steel side ply 33 arranged to the inner side in the tire-width direction thereto, whereby the possibility of the rubber sheet 431 or 432 on the outer side in the tire-width direction of the RFID tag 40 being damaged rises. Therefore, if adopting the present embodiment in a case of the RFID tag 40 being arranged more to the inner side in the tire-width direction than the carcass ply 23 or steel side ply 33, it is possible to more effectively protect the RFID tag 40, even under such conditions.

It should be noted that it is also possible to apply a form filling rubber into the spring antenna 421 of the present embodiment upon using the protective member 44 of the fourth embodiment.

According to the tire of the present embodiment, the following effects are exerted in addition to the above (1) to (11) .
(12) The present embodiment provides a step of arranging the rubber 46 within the spring antenna 421 of the RFID tag 40 serving as an electronic component having a communication function; a step of interposing the RFID tag 40 having the spring antenna 421 into which the rubber 46 was arranged, by the rubber sheets 431, 432, and an arrangement step of arranging the RFID tag 40 interposed by the rubber sheets 431, 432 in the tire 1. The air 45 will thereby not remain inside the spring antenna 421. In addition, since it is unnecessary to be concerned about air pockets, the work of interposing the RFID tag 40 by the rubber sheets 431, 432 also becomes easy. In addition, since the distance L between the outer circumferential part of the spring antenna 421 and the outer surface of the rubber sheets 431, 432 is stabilized, the RFID tag 40 is sufficiently protected by the rubber sheets 431, 432. For example, the spring antenna 421 and steel cord 33B of the steel side ply 33 will not contact by the rubber sheets 431, 432 being damaged during vulcanization.
(13) In the present embodiment, the RFID tag 40 interposed by the rubber sheets 431, 432 is arranged more to the inner side in the tire-width direction than the carcass ply 23 or steel side ply 33. Also in such a configuration, the RFID tag 40 is sufficiently protected by the rubber sheets 431, 432 during the vulcanization process.

It should be noted that, although the tire of the present invention can be adopted as various types of tires such as for cars, light trucks, trucks and buses, it is particularly suitable as a tire for passenger cars. It should be noted that the present invention is not to be limited to the above-mentioned embodiments, as the scope of the invention is defined by the appended claims.

### EXPLANATION OF REFERENCE NUMERALS

- 1, 2, 3: tire
- 11: bead
- 12: tread
- 13: side wall
- 21: bead core
- 22: bead filler
- 22A: tire-radial direction outside end of bead filler
- 23: carcass ply
- 24: ply body
- 25: ply folding part
- 26: steel belt
- 27: cap ply
- 28: tread rubber
- 29: inner liner
- 30: side-wall rubber
- 31: chafer
- 32: rim strip rubber
- 33: steel side ply
- 33B: steel cord
- 33C: coating rubber
- 34: insulating layer
- 40: RFID tag
- 41: RFID chip
- 42: antenna
- 421: spring antenna
- 43: protective member
- 431, 432: rubber sheet
- 44: protective member
- 441, 442: rubber sheet
- 46: rubber

## Claims

1. A tire (1, 2, 3) comprising:
a carcass ply (23) which extends from one bead core (21) to another bead core (21);
a metal reinforcement layer (33) which reinforces the carcass ply (23);
an electronic component (40); and
an insulating layer (34) which is disposed between the metal reinforcement layer (33) and the electronic component (40) ;
**characterized in that**:
the electronic component (40) is disposed in a state sandwiched between the metal reinforcement layer (33) and the carcass ply (23).

2. The tire (1, 2) according to claim 1, further comprising:
a ring-shaped tread (12) extending in a circumferential direction of the tire; and
a pair of beads (11) having a bead filler (22) which extends to an outer side in a tire-radial direction of the bead core (21),
wherein the carcass ply (23) includes: a ply body (24) which extends from the one bead core (21) to the other bead core (21), and a ply folding part (25) which is folded back around the bead core (21),
wherein the metal reinforcement layer (33) is provided between the ply folding part (25) and the bead filler (22), and
wherein the electronic component (40) is provided between the metal reinforcement layer (33) and the ply folding part (25) .

3. A tire (1, 2, 3) comprising:
a carcass ply (23) which extends from one bead core (21) to another bead core (21);
a metal reinforcement layer (33) which reinforces the carcass ply (23);
an electronic component (40); and
an insulating layer (34) which is disposed between the metal reinforcement layer (33) and the electronic component (40) ;
a ring-shaped tread (12) extending in a circumferential direction of the tire; and
a pair of beads (11) having a bead filler (22) which extends to an outer side in a tire-radial direction of the bead core (21),
wherein the carcass ply (23) includes: a ply body (24) which extends from the one bead core (21) to the other bead core (21), and a ply folding part (25) which is folded back around the bead core (21),
**characterized in that** the metal reinforcement layer (33) is provided between the ply folding part (25) and the bead filler (22), and
**in that** the electronic component (40) is provided between the metal reinforcement layer (33) and the bead filler (22).

4. A tire manufacturing method for a tire (1, 2, 3) which includes: a carcass ply (23) extending from one bead core (21) to another bead core (21), a metal reinforcement layer (33) which reinforces the carcass ply (23), and an electronic component (40), the method comprising:
an arrangement step of arranging an insulating layer (34) between the metal reinforcement layer (33) and the electronic component (40), prior to a vulcanization step of vulcanizing a green tire;
wherein the electronic component (40) is disposed in a state sandwiched between the metal reinforcement layer (33) and the carcass ply (23).

5. A tire manufacturing method for a tire (1, 2, 3) which includes: a carcass ply (23) extending from one bead core (21) to another bead core (21), a metal reinforcement layer (33) which reinforces the carcass ply (23), and an electronic component (40), the method comprising:
an arrangement step of arranging an insulating layer (34) between the metal reinforcement layer (33) and the electronic component (40), prior to a vulcanization step of vulcanizing a green tire;
wherein the tire (3) further comprises:
a ring-shaped tread (12) extending in a circumferential direction of the tire; and
a pair of beads (11) having a bead filler (22) which extends to an outer side in a tire-radial direction of the bead core (21),
wherein the carcass ply (23) includes: a ply body (24) which extends from the one bead core (21) to the other bead core (21), and a ply folding part (25) which is folded back around the bead core (21),
wherein the metal reinforcement layer (33) is provided between the ply folding part (25) and the bead filler (22), and
wherein the electronic component (40) is provided between the metal reinforcement layer (33) and the bead filler (22).

## Patentansprüche

1. Reifen (1, 2, 3), umfassend:
eine Karkassenlage (23), die sich von einem Wulstkern (21) zu einem anderen Wulstkern (21) erstreckt;
eine Metallverstärkungsschicht (33), die die Karkassenlage (23) verstärkt;
ein elektronisches Bauteil (40); und
eine Isolierschicht (34), die zwischen der Metallverstärkungsschicht (33) und dem elektronischen Bauteil (40) angeordnet ist;
**dadurch gekennzeichnet, dass**:
das elektronische Bauteil (40) in einem Zustand eingefügt zwischen der Metallverstärkungsschicht (33) und der Karkassenlage (23) angeordnet ist.

2. Reifen (1, 2) nach Anspruch 1, überdies umfassend:
eine ringförmige Lauffläche (12), die sich in einer Umfangsrichtung des Reifens erstreckt; und
ein Paar Wulste (11), die einen Kernreiter (22) aufweisen, der sich zu einer Außenseite in einer Reifenradialrichtung des Wulstkerns (21) erstreckt,
wobei die Karkassenlage (23) Folgendes umfasst: einen Lagenkörper (24), der sich von dem einen Wulstkern (21) zu dem anderen Wulstkern (21) erstreckt, und einen Lagenfaltteil (25), der um den Wulstkern (21) zurückgefaltet ist,
wobei die Metallverstärkungsschicht (33) zwischen dem Lagenfaltteil (25) und dem Kernreiter (22) vorgesehen ist und
wobei das elektronische Bauteil (40) zwischen der Metallverstärkungsschicht (33) und dem Lagenfaltteil (25) vorgesehen ist.

3. Reifen (1, 2, 3), umfassend:
eine Karkassenlage (23), die sich von einem Wulstkern (21) zu einem anderen Wulstkern (21) erstreckt;
eine Metallverstärkungsschicht (33), die die Karkassenlage (23) verstärkt;
ein elektronisches Bauteil (40); und
eine Isolierschicht (34), die zwischen der Metallverstärkungsschicht (33) und dem elektronischen Bauteil (40) angeordnet ist;
eine ringförmige Lauffläche (12), die sich in einer Umfangsrichtung des Reifens erstreckt; und
ein Paar Wulste (11), die einen Kernreiter (22) aufweisen, der sich zu einer Außenseite in einer Reifenradialrichtung des Wulstkerns (21) erstreckt,
wobei die Karkassenlage (23) Folgendes umfasst: einen Lagenkörper (24), der sich von dem einen Wulstkern (21) zu dem anderen Wulstkern (21) erstreckt, und einen Lagenfaltteil (25), der um den Wulstkern (21) zurückgefaltet ist,
**dadurch gekennzeichnet, dass** die Metallverstärkungsschicht (33) zwischen dem Lagenfaltteil (25) und dem Kernreiter (22) vorgesehen ist, und
dadurch, dass das elektronische Bauteil (40) zwischen der Metallverstärkungsschicht (33) und dem Kernreiter (22) vorgesehen ist.

4. Reifenherstellungsverfahren für einen Reifen (1, 2, 3), der Folgendes umfasst: eine Karkassenlage (23), die sich von einem Wulstkern (21) zu einem anderen Wulstkern (21) erstreckt, eine Metallverstärkungsschicht (33), die die Karkassenlage (23) verstärkt, und ein elektronisches Bauteil (40), wobei das Verfahren Folgendes umfasst:
einen Anordnungsschritt des Anordnens einer Isolierschicht (34) zwischen der Metallverstärkungsschicht (33) und dem elektronischen Bauteil (40) vor einem Vulkanisierungsschritt des Vulkanisierens eines Reifenrohlings;
wobei das elektronische Bauteil (40) in einem Zustand eingefügt zwischen der Metallverstärkungsschicht (33) und der Karkassenlage (23) angeordnet ist.

5. Reifenherstellungsverfahren für einen Reifen (1, 2, 3), der Folgendes umfasst: eine Karkassenlage (23), die sich von einem Wulstkern (21) zu einem anderen Wulstkern (21) erstreckt, eine Metallverstärkungsschicht (33), die die Karkassenlage (23) verstärkt, und ein elektronisches Bauteil (40), wobei das Verfahren Folgendes umfasst:
einen Anordnungsschritt des Anordnens einer Isolierschicht (34) zwischen der Metallverstärkungsschicht (33) und dem elektronischen Bauteil (40) vor einem Vulkanisierungsschritt des Vulkanisierens eines Reifenrohlings;
wobei der Reifen (3) überdies Folgendes umfasst:
eine ringförmige Lauffläche (12), die sich in einer Umfangsrichtung des Reifens erstreckt; und
ein Paar Wulste (11), die einen Kernreiter (22) aufweisen, der sich zu einer Außenseite in einer Reifenradialrichtung des Wulstkerns (21) erstreckt,
wobei die Karkassenlage (23) Folgendes umfasst: einen Lagenkörper (24), der sich von dem einen Wulstkern (21) zu dem anderen Wulstkern (21) erstreckt, und einen Lagenfaltteil (25), der um den Wulstkern (21) zurückgefaltet ist,
wobei die Metallverstärkungsschicht (33) zwischen dem Lagenfaltteil (25) und dem Kernreiter (22) vorgesehen ist und
wobei das elektronische Bauteil (40) zwischen der Metallverstärkungsschicht (33) und dem Kernreiter (22) vorgesehen ist.

## Revendications

1. Pneumatique (1, 2, 3) comprenant :
un pli de carcasse (23) qui s'étend d'une tringle de talon (21) à une autre tringle de talon (21) ;
une couche de renforcement métallique (33) qui renforce le pli de carcasse (23) ;
un composant électronique (40) ; et
une couche d'isolation (34) qui est placée entre la couche de renforcement métallique (33) et le composant électronique (40) ;
**caractérisé en ce que** :
le composant électronique (40) est placé dans un état pris en sandwich entre la couche de renforcement métallique (33) et le pli de carcasse (23).

2. Pneumatique (1, 2) selon la revendication 1, comprenant en outre :
une bande de roulement en forme d'anneau (12) s'étendant dans la direction circonférentielle du pneumatique ; et
une paire de tringles (11) ayant un bourrage sur tringle (22) qui s'étend vers un côté extérieur dans une direction radiale du pneumatique de la tringle de talon (21),
dans lequel le pli de carcasse (23) comprend : un corps de pli (24) qui s'étend de l'une tringle de talon (21) à l'autre tringle de talon (21), et une partie repliée du pli (25) qui est repliée autour de la tringle de talon (21),
dans lequel la couche de renforcement métallique (33) est placée entre la partie repliée du pli (25) et le bourrage sur tringle (22), et
dans lequel le composant électronique (40) est placé entre la couche de renforcement métallique (33) et la partie repliée du pli (25).

3. Pneumatique (1, 2, 3) comprenant :
un pli de carcasse (23) qui s'étend d'une tringle de talon (21) à une autre tringle de talon (21) ;
une couche de renforcement métallique (33) qui renforce le pli de carcasse (23) ;
un composant électronique (40) ; et
une couche d'isolation (34) qui est placée entre la couche de renforcement métallique (33) et le composant électronique (40) ;
une bande de roulement en forme d'anneau (12) s'étendant dans la direction circonférentielle du pneumatique ; et
une paire de tringles (11) ayant un bourrage sur tringle (22) qui s'étend vers un côté extérieur dans une direction radiale du pneumatique de la tringle de talon (21),
dans lequel le pli de carcasse (23) comprend : un corps de pli (24) qui s'étend de l'une tringle de talon (21) à l'autre tringle de talon (21), et une partie repliée du pli (25) qui est repliée autour de la tringle de talon (21),
**caractérisé en ce que**
la couche de renforcement métallique (33) est placée entre la partie repliée du pli (25) et le bourrage sur tringle (22), et
de sorte que
le composant électronique (40) est placé entre la couche de renforcement métallique (33) et le bourrage sur tringle (22).

4. Procédé de fabrication de pneumatique pour un pneumatique (1, 2, 3) qui comprend : un pli de carcasse (23) s'étendant d'une tringle de talon (21) à une autre tringle de talon (21), une couche de renforcement métallique (33) qui renforce le pli de carcasse (23), et un composant électronique (40), le procédé comprenant :
une étape d'agencement pour l'agencement d'une couche d'isolation (34) entre la couche de renforcement métallique (33) et le composant électronique (40), avant une étape de vulcanisation pour la vulcanisation d'un pneumatique vert ;
dans lequel le composant électronique (40) est placé dans un état pris en sandwich entre la couche de renforcement métallique (33) et le pli de carcasse (23).

5. Procédé de fabrication de pneumatique pour un pneumatique (1, 2, 3) qui comprend : un pli de carcasse (23) s'étendant d'une tringle de talon (21) à une autre tringle de talon (21), une couche de renforcement métallique (33) qui renforce le pli de carcasse (23), et un composant électronique (40), le procédé comprenant :
une étape d'agencement pour l'agencement d'une couche d'isolation (34) entre la couche de renforcement métallique (33) et le composant électronique (40), avant une étape de vulcanisation pour la vulcanisation d'un pneumatique vert ;
dans lequel le pneumatique (3) comprend en outre :
une bande de roulement en forme d'anneau (12) s'étendant dans la direction circonférentielle du pneumatique ; et
une paire de tringles (11) ayant un bourrage sur tringle (22) qui s'étend vers un côté extérieur dans une direction radiale du pneumatique de la tringle de talon (21),
dans lequel le pli de carcasse (23) comprend : un corps de pli (24) qui s'étend de l'une tringle de talon (21) à l'autre tringle de talon (21), et une partie repliée du pli (25) qui est repliée autour de la tringle de talon (21),
dans lequel la couche de renforcement métallique (33) est placée entre la partie repliée du pli (25) et le bourrage sur tringle (22), et
dans lequel le composant électronique (40) est placé entre la couche de renforcement métallique (33) et le bourrage sur tringle (22).
